Europäisches Patentamt

European Patent Office

Office européen des brevets

(11) Veröffentlichungsnummer : **0 060 449**
**B1**

(12) **EUROPÄISCHE PATENTSCHRIFT**

(45) Veröffentlichungstag der Patentschrift :
18.09.85

(21) Anmeldenummer : 82101686.2

(22) Anmeldetag : 04.03.82

(51) Int. Cl.⁴ : **A 01 K 13/00, B 68 C 1/12**

(54) Schutzdecke für Huf- und Haustiere, insbesondere Pferde und Hunde.

(30) Priorität : 12.03.81 CH 1688/81

(43) Veröffentlichungstag der Anmeldung :
22.09.82 Patentblatt 82/38

(45) Bekanntmachung des Hinweises auf die Patenterteilung : 18.09.85 Patentblatt 85/38

(84) Benannte Vertragsstaaten :
AT BE CH DE FR GB IT LI LU NL SE

(56) Entgegenhaltungen :
DE-A- 1 928 505
FR-A-   341 028
FR-A- 2 449 050
FR-A- 2 457 666
GB-A-   152 362
GB-A- 1 029 346
GB-A- 2 066 636
US-A- 1 558 117
US-A- 2 131 495
US-A- 3 248 852
US-A- 3 807 136

(73) Patentinhaber : TEMOVA ETABLISSEMENT
Landstrasse 140
FL-9494 Schaan (LI)

(72) Erfinder : Benckhuijsen, Jan Gerrit
Landstrasse 140
FL-9494 Schaan (LI)

(74) Vertreter : Büchel, Kurt F., Dr.
Austrasse 4
FL-9490 Vaduz (LI)

**Beschreibung**

Die Erfindung betrifft eine Schutzdecke für Huf- und Haustiere, insbesondere Pferde und Hunde, welche dem Tierrücken den Bereich zwischen Nacken und Schweif abdeckend aufliegt.

Huftiere, insbesondere Pferde, sind ausserhalb des Stalls oftmals unerwünschten Kälteeinwirkungen ausgesetzt, sei es infolge kühler Witterung oder nach körperlicher Beanspruchung durch Verdunstungskälte auf der Haut. Rennsportpferde sind nach Training oder Rennen abzureiben, da eine überworfene herkömmliche Wolldecke die Schweissnässe konserviert. Bei bestimmten Pferdeerkrankungen, z. B. Grippe oder Nierenleiden, ist eine Wärmebehandlung auf der Haut im Bereich der erkrankten Organe wünschenswert. Hierzu sind jedoch die bekannten Woll- oder Leinendecken ungeeignet, da sie meistens die Verdunstungsfeuchtigkeit nicht abführen und im feuchten Zustand keine Erwärmung bewirken. Mit den Nachteilen eines ungenügenden Kälteschutzes sind auch die handelsüblichen Hundemäntel und -decken behaftet. Als untauglich erweisen sich diese Decken besondes bei solchen Hunderassen, die aufgrund eines kurz- oder unbehaarten Felles besonders witterungsempfindlich sind.

Die Erfindung hat sich zur Aufgabe gestellt, eine Schutzdecke zu schaffen, die einen verbesserten Wärmeschutz bildet gegen Witterungs- und Verdunstungskälte. Eine weitere Aufgabe besteht darin, mit dieser Decke zugleich ein therapeutisch wirksames Heilmittel zur Verfügung zu stellen.

Diese Aufgaben werden mit einer Schutzdecke der genannten Art gelöst, die aus zwei gegenseitig bereichsweise verschiebbaren Lagen eines Gestricks (6) aus zur Erzeugung von Reibungselektrizität geeigneten unhygroskopischen Kunststoffasern besteht, das 50 bis 125 Maschen pro cm² und Lage aufweist.

Eine Sattelunterlage ähnlicher Konstruktion ist in US-A 3 807.136 beschrieben, doch handelt es sich dort schon von der Grösse her nicht um eine Decke im Sinne der Erfindung ; darüberhinaus besteht die innere Lage aus einem sehr dichten Hochflor-stoff, der bestenfalls eine Luftzirkulation zwischen den relativ starken Flor-haaren ermöglicht, aber noch dazu in Kombination mit einer wenig luftdurchlässigen Schaumstoff — Flockenverbund — Zwischenlage — die Auflage als solche luftdurchlässig macht, wie dies durch die erfindungsgemäss beanspruchte Maschenzahl geschieht.

Die Erfindung ist im folgenden für einige Ausführungsbeispiele anhand der beiliegenden Zeichnungen näher erläutert. Es zeigen

Figur 1 in vereinfachter schematischer Darstellung eine Draufsicht auf die Aussenseite einer als Reitdecke ausgebildeten Schutzdecke ;

Figur 2 in vereinfachter schematischer Darstellung eine Draufsicht auf die der Haut anliegenden Unterseite der Decke von Fig. 1 ;

Figur 3 in vereinfachter schematischer Darstellung einen Schnitt entlang der Linie I-I von Fig. 1 einer teilweise aufgerollten Decke ;

Figur 4 zwei Darstellungen eines weiteren Ausführungsbeispiels einer Schutzdecke für Pferde ;

Figur 5 in vereinfachter schematischer Darstellung eine Draufsicht auf die Aussenseite der Schutzdecke von Fig. 4 ;

Figur 6 einen Teilschnitt durch die Schutzdecke von Fig. 4 längs der Linie II-II von Fig. 4 ;

Figur 7 in vereinfachter Darstellung eine perspektivische Ansicht auf die ausgebreitete Innenseite einer Schutzdecke für Hunde ;

Figur 8 eine Ansicht auf die Aussenseite der Hundedecke von Fig. 7 in zugeklapptem Zustand ;

Figur 9 einen Schnitt durch die Hundedecke längs der Linie III-III von Fig. 7 in vereinfachter Darstellung.

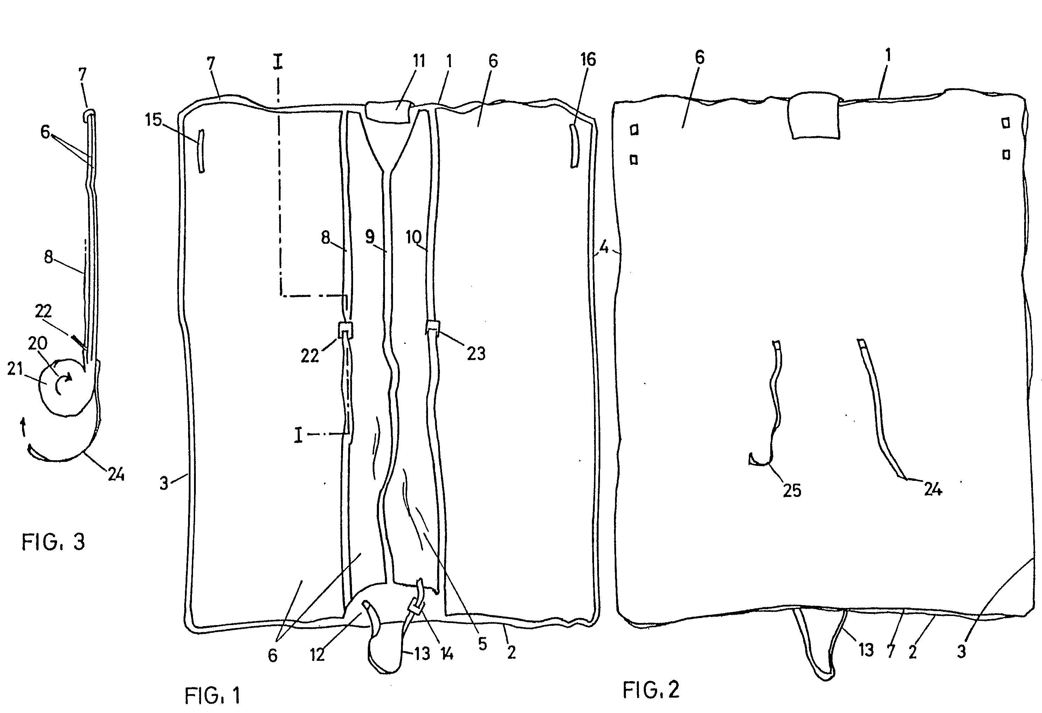

Das Ausführungsbeispiel nach Fig. 1 bis 3 zeigt eine als Reitdecke ausgebildete Schutzdecke für Pferde vorgesehen zur Unterlage unter einen Sattel. Die annähernd rechteckige Decke ist vom kopfseitigen Nackenrand 1, rückseitigen Hinterrand 2 und den beiden bauchseitigen Seitenrändern 3, 4 umrandet. Das Format der Decke ist vorzugsweise derart ausgelegt, dass sie den gesamten Rückenbereich zwischen Schwanzwurzel und mittlerer Nackenhöhe abdeckt und seitlich bis in Höhe der unteren Bauchrundung abfällt. Als geeignet für ausgewachsene Tiere hat sich ein Format von 110 × 135 cm ± ± 10 % erwiesen. Die Decke kann zur passenden faltenfreien Anlage anatomisch dem Tierleib angepasst sein, wie z. B. in Fig. 1 durch die Wölbung 5 angedeutet ist, welche dem gerundeten Hinterteil aufliegt.

Die Decke ist im wesentlichen aus zwei Lagen eines Gestrickes 6 der weiter unten erläuterten Beschaffenheit aufgebaut. Die Textillagen sind längs den Rändern 1-4 mit einem Randschutz 7 vernäht, der die Ränder einfasst und aus einem nachgiebigen Kunststofftuch- oder -leder besteht. Aus gleichem Material bestehen die gemäss Fig. 1 der Aussenseite aufgesetzten und mit der Unterseite versäumten Verstärkungsstreifen 8-10 und die Schonkappen 11, 12. Wird die dargestellte Decke z. B. aus drei Textilbahnen gefertigt, so verlaufen die Streifen 8, 10 längs deren Verbindungsnähte. An der Schonkappe 12 des Hinterrandes 2 ist ein Riemen 13 befestigt, dessen freies Ende durch eine aufgenähte Schnalle 14 führt. Der Riemen 13 bildet eine anziehbare Schlinge zwecks Durchführung des Pferdeschweifs und Fixierung der Decke an der Schweifwurzel. In den Ecken des Nackenrandes 1 mit den Seitenrändern 3, 4 ist je eine Schlaufe 15, 16 aufgenäht, durch welche jeweils ein Gurt eines Saumzeugs führt und die Decke am Pferd befestigt werden kann.

Obwohl das Pferd auch bei vollständig ausgebreiteter Decke reitfähig bleibt, ist es von Vorteil, wenn sich der Hinterteil vor oder nach dem Ritt mit leichten Hantierungen ab- bzw. zudecken lässt. Zu diesem Zweck kann die vorliegende Decke wie in Fig. 3 dargestellt am Pferdeleib in Pfeilrichtung 20 um einen Betrag von hinten nach vorne aufgerollt und die entstehende Rolle 21 fixiert werden. Zur Fixierung dienen hierbei die den Streifen 8, 10 aufgenähten Schnallen 22, 23 sowie die auf der Unterseite unter den Schnallen befestigten Riemen 24, 25. Die Riemen 24, 25 weisen nach hinten und können um die Rolle 21 herum in die Schnallen 22, 23 festgezurrt werden.

Es wurde bereits eingangs gesagt, dass der Erfindungszweck der vorstehenden Decke ausser als Reitdecke erfindungswesentlich in seiner Schutzwirkung besteht gegen witterungs oder verdunstungsbedingte Kälteeinwirkung. Diese Schutzfunktion sowie die therapeutische Wirkung der Decke ergibt sich aus der Beschaffenheit des doppellagigen Gestrickes 6. Aus der Humanmedizin sind zur Erzeugung von Reibungselektrizität geeignete Kunstfasertextilien bekannt, die gegenüber der Haut eine elektrostatische Aufladung und ein hieraus resultierendes Wärmegefühl hervorrufen, weshalb derartige Textilien in Gesundheitswäsche Anwendung finden. Wird bei der vorstehend beschriebenen Schutzdecke das Gestrick 6 aus einem derartigen Textil hergestellt, so eignet sich Decke auch als therapeutisches Mittel zur Behandlung einer Nierenerkrankung, da sie dem betreffenden Körperbereich unter starker elektrostatischer Wärmeentwicklung aufliegt. Hierbei ist es vorteilhaft, dass das Tier nicht im Stall verbleiben muss, da die körperliche Bewegung die Entstehung von Reibungselektrizität und somit die Wärmeentwicklung fördert. Belangvoll ist ferner der Umstand, dass das Gestrick 6 der nachstehenden Beschaffenheit nichthygroskopisch ist und eine Maschenweite besitzt, welche ein einwandfreies Verdunsten von Hautfeuchtigkeit gewährleistet.

Dadurch verhindert die Decke, auf einen schweissnassen Körper aufgelegt, die Verdunstungskälte, da bei austretender Feuchtigkeit die reibungselektrische Wärmeentwicklung einsetzt.

Bei dem genannten Gestrick 6 handelt es sich um ein Kunstfasergestrick, für das sich paraffinierte Polyvinylchloridfasern als geeignet erwiesen haben, wobei den Polyvinylchloridfasern zur Erhöhung der Reissfestigkeit ein Anteil von 10-15 % Acrylfasern beigefügt sein kann. Es können jedoch auch andere zur Erzeugung von Reibungselektrizität geeignete synthetische Fasern zur Herstellung des Gestricks 6 angewandt werden. Damit die Ladung auf der Haut und die entstehende elektrostatische Spannung einen möglichst hohen und dauernd aufrecht erhaltenen Wert besitzt, sollte das Gestrick einerseits möglichst dicht sein zwecks Erzeugung hoher elektrostatischer Werte und andererseits genügende Maschenweite besitzen zwecks leichtem Verdunsten der Hautfeuchtigkeit. Diese Erfordernisse können durch Feinrippgestricke oder Interlockgestricke der nachfolgenden Kenndaten am besten erfüllt werden.

Das Feinrippgestrick wird erzeugt mit einer Stichzahl von 25 Stiche/2 cm Länge und 15 Stiche/2 cm Breite, einer Maschenzahl von $80/cm^2$ und einem Gewicht von 160 $gr/cm^2$. Allgemein wurden als wirksamste Stichzahlenbereiche 18-25 bzw. 12-20 Stiche pro 2 cm Länge bzw. Breite und 120-180 $gr/cm^2$ als bevorzugter Gewichtsbereich für das Feinrippgestrick ermittelt. Bei einem auf Interlockbasis und einer Verarbeitung mit 16 Nadeln auf 2 cm erzeugten Interlockgestrick betragen die für den Anwendungszweck wirksamsten Kenndaten : Garngewicht 40 000-50 000 m Länge/kg, Stichzahl 20-30 Stiche/2 cm in Länge und Breite. Flächengewicht 150-300 $gr/m^2$. Typisch sind z. B. für ein 40 000 m/kg Garn : 26(25) Stiche auf 2 cm Länge (Breite) und 260 $gr/m^2$ Gewicht ; für ein 50 000 m/kg Garn : 25(24) Stiche auf 2 cm Länge (Breite) und 200 $gr/m^2$ Gewicht. Die doppellagige Decke besitzt also jeweils ein Gewicht von 250-400 $gr/m^2$.

Wie vorstehend angegeben und aus Figur 3 ersichtlich, ist die Schutzdecke aus zwei Lagen des vorstehenden Gestricks 6 aufgebaut. Da diese Lagen bereichsweise gegenseitig verschiebbar sind, erhöhen sich hierdurch die elektrostatischen Spannungen gegen die Haut und können 30 KV übersteigen.

Die Schutzdecke braucht nicht als Reitdecke gemäss dem Ausführungsbeispiel ausgebildet sein, sondern lediglich eine Beschaffenheit als Ueberwurfdecke aufweisen. Für andere Huftiere, z. B. Ponys, erniedrigen sich die genannten Abmessungen um 25 %.

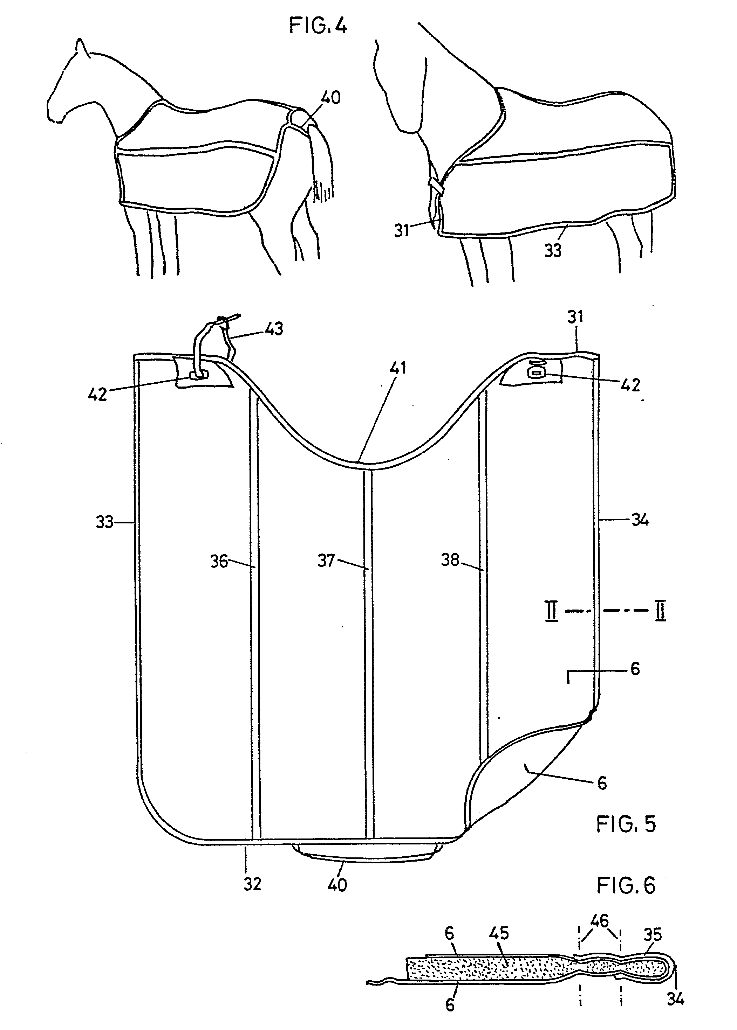

Eine bevorzugte Ausführung einer Pferdedecke ist in Figur 4-6 dargestellt. Diese Schutzdecke mit Abmessungen von z. B. 180 × 170 cm unterscheidet sich von der Decke nach Figur 1-3 darin, dass sie einen geänderten Schnitt und insbesondere eine Einlage zwischen den beiden Lagen des Gestricks 6 aufweist. Bezugnehmend auf Figur 5 und analog zum ersten Ausführungsbeispiel besitzt auch diese Decke Ränder 31-34, die von einem Randschutz 35 aus Kunststofftuch oder Leder eingefasst sind, ferner aussenseitig Verstärkungsstreifen 36-38 aus demselben Material, sowie eine Schlinge 40 am Hinterrand 32 zur Fixierung der Decke an der Schweifwurzel. Dagegen ist diese Pferdedecke nunmehr am Nackenrand 31 mit einem Ausschnitt 41 dergestalt ausgebildet, sodass sie beidseits um die untere Hals- und Brustpartie angelegt und befestigt werden kann, wie in Figur 4 veranschaulicht ist. Zur Befestigung dienen hierbei beidseits des Ausschnitts 41 angebrachte Oesen 42 für einen Riemen 43. Obwohl die vorliegende Decke vergleichsweise tief um den Hals ausgeschnitten ist, ermöglicht eine solche Schnittform der Decke prinzipiell auch eine Umhüllung der mittleren bis höheren Halspartie, weshalb diese Schutzdecke besonders geeignet ist zur Behandlung von Erkältungskrankheiten.

Die dem Tierleib anliegende Unterseite besteht durchgehend aus demselben Textil 6, wie es vorangehend anhand des ersten Ausführungsbeispiels beschrieben wurde. Dementsprechend erübrigt sich eine wiederholende Erläuterung desselben, und die Schutzdecke von Figur 4-6 erzeugt dieselben dort genannten vorteilhaften Schutzwirkungen gegen witterungs- und verdunstungsbedingter Kälteeinflüsse und besitzt aufgrund der elektrostatischen Ladungserzeugung gegenüber der Haut therapeutische Wirksamkeit. Der Kälteschutz und der therapeutische Effekt wird bei der vorliegenden Schutzdecke nun dadurch gesteigert, dass die Decke mit einer Einlage 45 versehen ist. Wie der Teilschnitt von Figur 6 verdeutlicht, erstreckt sich die Einlage 45 bis zu den Rändern 31-34, verläuft also durch die ganze Decke. Die Einlage 45 soll derart nachgiebig geschmeidig sein, dass sie zum Anlagedruck des Textils 6 an der Haut beiträgt, um dessen Wirksamkeit zu ehröhen. Ferner muss die Einlage 45 ausreichend luftdurchlässig sein. Denn in Verbindung mit einem Textil 6 der geschilderten Beschaffenheit und Eigenschaften ist eine derartige Luftdurchlässigkeit der Einlage 45 notwendig, damit von der Haut verdunstete Luftfeuchtigkeit die Schutzdecke leicht passieren kann. Als geeignet erwiesen für die Einlage 45 hat sich ein Schaum aus Polyvinylchlorid (PVC) oder aus Polyurethan, welche Materialien infolge offener Poren luftdurchlässig sind. Die bevorzugte Dicke der Einlage 45 aus einem derartigen Schaum beträgt 5-10 mm.

Selbstverständlich soll die Decke auch ausseneitig luftdurchlässig sein. Wie die praktische Erprobung erwiesen hat, steigt die therapeutische Wirksamkeit der Decke, wenn anstelle eines beliebigen luftdurchlässigen Materials, z. B. Leinen, ebenfalls das Textil 6 der vorstehend angegebenen Beschaffenheit die Aussenseite der Decke bildet. Vorteilhaft ist ferner, wenn zwei gegenseitig bereichsweise verschiebbare Lagen des Textils 6 die Einlage 45 allseits umgeben.

Wie in Fig. 6 angedeutet, ist der um den Seitenrand 34 umgeschlagene Randschutz 35 aus Kunststofftuch oder -leder mittels durchgehender Nähte in Richtung 46 fixiert, die zugleich die Textilien 6 der Aussen- und Unterseite mit der Einlage 45 fixieren. Durch derartige Nähte 46 sind auch die aussenseitigen Verstärkungsstreifen 36-38 und gegebenenfalls weiter vorhandene aussenseitig angebrachte Streifen und Befestigungsmittel mit dem unterseitigen Textil 6 vernäht. Bei den Nähten 46 handelt es sich entweder um herkömmliche Nähnähte oder auch um Schweissnähte, da alle zu verbindenden Materialien auch nach einem aus der Lederindustrie bekannten Hochfrequenz-Schweisspressverfahren verarbeitet werden können.

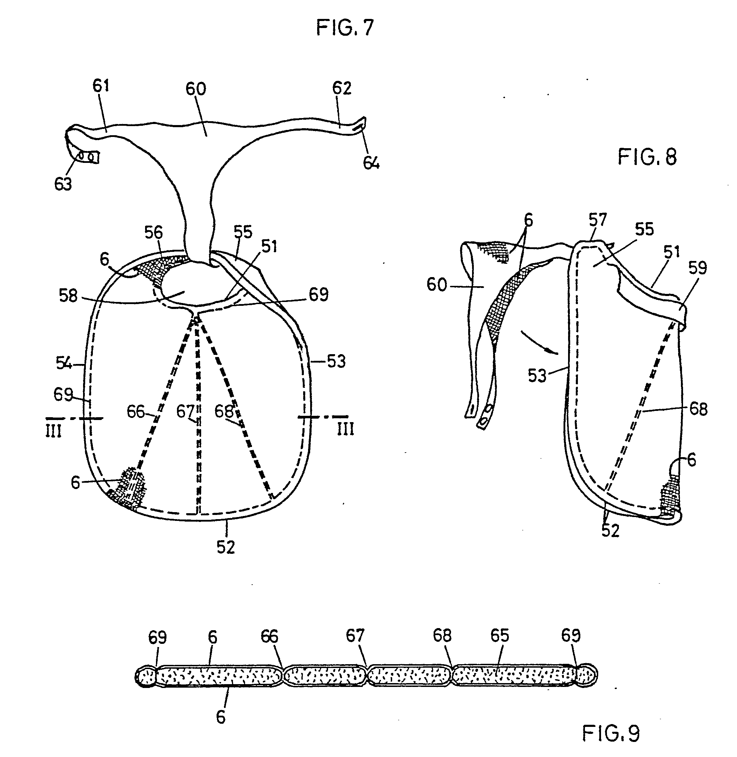

Die Schutzdecke der erfindungsgemässen Beschaffenheit kommt ausser für Pferde und andere Huftierrassen auch für weitere vierbeinige Haustiere, insbesondere Hunde, in Betracht. Die Figur 7-9 zeigen eine beispielsweise Ausführung einer als Hundedecke ausgebildeten Schutzdecke. In Analogie zu den beiden vorangehend beschriebenen Pferdedecken bestehen auch bei der Hundedecke Innen- und Aussenseite durchgehend aus dem vorangehend erläuterten Gestrick 6, das hier durch Kreuzschraffer andeutungsweise veranschaulicht ist. Es treffen also auch für die Hundedecke alle aus der Verwendung dieses Textils 6 resultierenden Wärmeeigenschaften und therapeutischen Wirkungen zu, wie sie für die Schutzdecke nach Figur 1-3 geschildert wurden, weshalb zur Vermeidung von Wiederholungen auf die diesbezüglichen Textteile verwiesen wird.

Gemäss Fig. 7, 8 weist die Hundedecke einen vorderen Nackenrand 51, hinteren Rückenrand 52 und Seitenränder 53, 54 auf. Der Nackenrand 51 ist annähernd halbkreisförmig ausgeschnitten unter Bildung von zwei seitlichen Fortsätzen 55, 56, deren Enden längs der Kante 57 zusammengefügt sind. Hierdurch entsteht eine vom Nackenrand 51 umgebene Halsöffnung 58 zum Durchlass des Kopfes, was die Decke um den Hals befestigt. Dei beiden zusammengefügten Fortsätze 55, 56 bilden zusammen einen Halskragen, der den Hals unterseitig einhüllt. Auf der Aussenseite verläuft entlang dem oberen Nackenrand 51 ein Nackenkragen 59, der kopfwärts umgestülpt werden kann. Der dreieckförmige Brustteil 60 bildet einen Teil der Decke, der die dorsale Abdeckung des Tierleibs in eine ventrale Abdeckung fortsetzt. Der Brustteil 60 hängt mit seinem einen Schenkel bei der Verbindungsnaht 57 aus der Halsöffnung 58 heraus, während die beiden anderen Schenkel als Befestigungsbänder 61, 62 ausgebildet und mit knöpfen 63 bzw. einem Knopfloch 64 ausgestattet sind. Ersichtlicherweise deckt der angelegte Brustteil 60 die untere Halspartie, den Brustkasten und den Bauchbereich ab, wobei die Bänder 61, 62 sowohl über den Tierrücken als auch über die Aussenseite der Decke herumgeschlagen sein können. Erfindungsgemäss besteht auch der Brustteil 60 als Teil der Hundedecke durchgehend aus zwei Lagen des genannten Textils 6, wie in Figur 8 angedeutet ist.

Gemäß Fig. 9 kann auch bei einer Hundedecke der vorstehenden Ausbildung der dorsale Teil eine Einlage 65 enthalten, während der Brustteil 60 ohne Einlage bleibt. Da an die Einlage 65 dieselben Forderungen gestellt werden wie an die Einlage 45 der Pferdedecke nach Figur 4-6, erweist sich auch hier ein luftdurchlässiger Schaumkörper aus PVC oder Polyurethan als besonders günstig als Einlage. Zwecks einer passenden Anlage an die Rückenrundung ist die Einlage zum Hinterrand 52 hin fächerförmig aufgeschnitten. Entlang den Schnittlinien verlaufen eingenommene Nähte 66-68, welche die Textilien der Aussen- und Unterseite miteinander verbinden. Mit derartigen Nähten 69 sind ebenfalls die Ränder 51-54 eingefasst sowie auch der Rand des Brustteils 60, wobei alle auftretenden Nähte je nach Herstellungsverfahren sowohl Näh- als auch Schweissnähte sein können.

Das vorstehende Modell der Hundedecke ist für den Sommer- und Wintergebrauch geeignet und kann hinsichtlich seiner Abmessungen allen geläufigen Hunderassen angepasst sein. Die typischen Längen der Rückennaht 67, um welche sich die Decke zusammenklappen lässt, liegen im Bereich zwischen 20 ... 50 cm. In den Erfindungsbereich fallen auch Hundedecken ohne Einlage 65 und/oder ohne Brusteil 60.

**Patentansprüche**

1. Schutzdecke für Huf- und Haustiere, insbesondere Pferde und Hunde, welche dem Tierrücken den Bereich zwischen Nacken und Schweif abdeckend aufliegt, dadurch gekennzeichnet, dass sie aus zwei gegenseitig bereichsweise verschiebbaren Lagen eines Gestricks (6) aus zur Erzeugung von Reibungselektrizität geeigneten unhygroskopischen Kunststoffasern besteht, das 50 bis 125 Maschen pro cm$^2$ und Lage aufweist.

2. Schutzdecke nach Anspruch 1, gekennzeichnet durch eine luftdruchlässige Einlage (45, 65) aus Schaumstoff zwischen den beiden Lagen des Textils (6).

3. Schutzdecke nach Anspruch 1 oder 2, dadurch gekennzeichnet, dass die Kunststoffasern — vorzugsweise paraffinierte — Polyvinylchloridfasern sind, denen gegebenenfalls etwa 10 bis 15 % Acrylfasern beigemischt sind.

4. Schutzdecke nach einem der vorhergehenden Ansprüche, dadurch gekennzeichnet, dass sie auf dem Tierleib von hinten um einen Betrag nach vorne aufrollbar ist und die gebildete Rolle (21) mittels an der Unterseite befestigten Riemen (24, 25) und auf der Aussenseite aufgenähten Schnallen (22, 23) zusammenbindbar ist.

5. Schutzdecke nach einem der vorhergehenden Ansprüche, gekennzeichnet durch ein vom Nackenrand (51) ausgehendes Brustteil (60) aus einer doppelten Lage des Gestricks (6), ausgebildet zur ventralen Anlage und versehen mit Befestigungsmitteln.

**Claims**

1. Protective cover for hoofed and domestic animals, especially horses and dogs, which lays upon and covers the area of the animal's back between the neck and the tail, wherein said protective cover consists of two layers of a knitted fabric (6) with 50 to 125 stitches per cm$^2$ and said layers are movable relative to on another, said knitted fabric consisting of non-hygroscopic plasic fibers suitable for generating friction electricity.

2. Protective cover as claimed in claim 1, characterized by an air-permeable foamed-plastic insert (45, 65) between the two layers of the textile (6).

3. Protective cover as claimed in any one of claims 1 or 2, wherein the plastic fibers are — preferably paraffinated — polyvinyl chloride fibers, to which about 10 to 15 % acryl fibers are possibly added.

4. Protective cover as claimed in any one of the preceding claims, wherein said cover can be rolled up on the animals body to a certain degree from the rear toward the front, and wherein the roll (21) thereby formed can be tied together by the use of straps (24, 25) fastened to the underside and buckles (22, 23) sewn onto the outside.

5. Protective cover as claimed in any one of the preceding claims, characterized by a breast portion (60) consisting of a double layer of the knitted fabric (6) extending from the edge of the neck (51), tailored for ventral application and furnished with fasteners.

**Revendications**

1. Couverture de protection pour équidés et animaux domestiques, chevaux et chiens en particulier, qui est posée sur le dos de l'animal en recouvrant la zone entre l'encolure et la queue, caractérisée en ce qu'elle est constituée de deux couches en partie mobiles l'une par rapport à l'autre d'un tricot (6) réalisé en fibres artificielles non hygroscopiques, aptes à la production de tribo-électricité, et présentant 50 à 125 mailles par cm$^2$ et par couche.

2. Couverture de protection selon la revendication 1, caractérisée par la présence entre les deux couches de textile (6) d'une garniture en mousse (45, 65) perméable à l'air.

3. Couverture de protection selon la revendication 1 ou 2, caractérisée en ce que les fibres artificielles sont des fibres de polychlorure de vinyle, de préférence paraffinées, auxquelles on mélange éventuellement environ 10 à 15 % de fibres acryliques.

4. Couverture de protection selon l'une quelconque des revendications précédentes, caractérisée en ce qu'elle peut être partiellement enroulée de l'arrière vers l'avant sur le corps de l'animal, et que le rouleau (21) ainsi formé peut être attaché au moyen de lanières (24, 25) fixées sur le dessous de la couverture et de boucles (22, 23) cousues sur le dessus de la couverture.

5. Couverture de protection selon l'une quelconque des revendications précédentes, caractérisée par un plastron (60) partant du bord d'encolure (51), réalisé en une double couche de tricot (6), prévu pour assurer une protection ventrale, et muni de moyens de fixation.

FIG. 2

FIG. 1

FIG. 3

**0 060 449**

FIG. 4

FIG. 5

FIG. 6

2

FIG. 7

FIG. 8

FIG. 9